# EUROPÄISCHE PATENTSCHRIFT

(11) **EP 1 713 838 B1**
(45) Veröffentlichungstag und Bekanntmachung des Hinweises auf die Patenterteilung: **15.08.2018**
(21) Anmeldenummer: 05707123.5
(22) Anmeldetag: 01.02.2005
(51) Int. Cl.: B01F 17/00, C10L 1/14, C10L 1/198, C10L 1/22, C10L 1/238, C08F 8/00, C08F 8/30, C10L 10/04, C10L 10/18

(54) **VERFAHREN ZUR HERSTELLUNG VON POLYISOBUTENYLPHENOLEN**
METHOD FOR PRODUCING POLYISOBUTENYLPHENOLS
PROCEDE DE PRODUCTION DE POLYISOBUTENYLPHENOLS

(30) Priorität: 02.02.2004 DE 102004005108
(43) Veröffentlichungstag der Anmeldung: 25.10.2006
(73) Patentinhaber: BASF SE, 67056 Ludwigshafen am Rhein (DE)
(72) Erfinder: LANGE, Arno, 67098 Bad Dürkheim (DE); MACH, Helmut, 69115 Heidelberg (DE); RATH, Hans, Peter, 67269 Grünstadt (DE); POSSELT, Dietmar, 69120 Heidelberg (DE); VINCKIER, Anja, 67063 Ludwigshafen (DE)
(86) Internationale Anmeldenummer: PCT/EP2005/000986
(87) Internationale Veröffentlichungsnummer: WO 2005/073152

(56) Entgegenhaltungen:
- EP-A2- 0 440 507
- WO-A-02/26839
- WO-A-02/26840
- DE-A1- 19 948 111
- FR-A- 2 548 194
- GB-A- 497 721
- GB-A- 758 474
- GB-A- 795 574
- GB-A- 1 020 460
- GB-A- 1 159 368
- GB-A- 1 212 462
- US-A- 2 398 253
- US-A- 2 739 172
- US-A- 3 360 464
- US-A- 3 449 444
- US-A- 4 708 809
- US-A- 5 300 701
- URBAN ET AL.: "Lipophilic 1,3-Xylyl-21-crown-6 Macrocyclic Polyether 2-Carboxylic Acids as Biological Mimics of the Ionophore Antibiotics" J. MED. CHEM., Bd. 33, Nr. 2, 1990, Seiten 765-771, XP009051181 uk
- K. U. INGOLD: "Inhibition of oil oxidation by 2,6-di-t-butyl-4-substituted phenols" J. PHYS. CHEM., Bd. 64, 1960, Seiten 1637-1642, XP009051180
- POSPISIL J ET AL: "ANTIOXYDATION AGENTS AND STABILIZERS. XI. THE SYNTHESIS OF 1,1,3,3,5,5-HEXAMETHYLHEXYLPHENOLS", COLLECTION OF CZECHOSLOVAK CHEMICAL COMMUNICATIONS, INSTITUTE OF ORGANIC CHEMISTRY & BIOCHEMISTRY, PRAGUE; CZ, vol. 31, 1 January 1996 (1996-01-01), pages 1839-1847, XP009051315, ISSN: 0010-0765

## Beschreibung

Die vorliegende Erfindung betrifft ein Verfahren zur Herstellung von 2-Alkyl-polyisobutenylphenolen und deren Mannich-Addukten, nach diesem Verfahren erhältliche Zusammensetzungen sowie deren Verwendung.

Es ist bekannt, aromatische Hydroxyverbindungen zur Herstellung von Polyalkenylphenolen mit Polyolefinen unter Verwendung saurer Katalysatoren zu alkylieren. Diese so genannte Friedel-Crafts-Alkylierung führt in der Regel zu Gemischen von Alkylierungsprodukten, da die alkylierten Produkte reaktionsfähiger sind als die unsubstituierten Ausgangsprodukte. Zudem treten beim Einsatz höhermolekularer Alkylierungsmittel sowohl am Polyolefin als auch am alkylierten Produkt häufig Fragmentierungsreaktionen auf, so dass in der Regel ein komplex zusammengesetztes Produktgemisch erhalten wird.

Für viele technische Anwendungen sind derartige Mischungen untauglich. Vielmehr sind Produkte definierter Zusammensetzung erforderlich, die eine Polyolefinsubstitution in definierten Positionen aufweisen. Zur Erzielung der gewünschten Produkteigenschaften sind zudem vielfach weitere Substituenten am Aromaten erforderlich, beispielsweise niedermolekulare Alkylreste, wobei sowohl deren Art als auch deren Position relevant sein kann. Es besteht somit ein Bedarf an Verfahren, die die Herstellung von Polyisobutenylphenolen ermöglichen, die zusätzlich in der 2- und/oder weiteren Positionen des Aromaten (bezogen auf die OH-Gruppe) substituiert sind.

Die GB-A-1 159 368 offenbart die Alkylierung von Phenol mit monoolefinischen polymeren Alkylierungsmitteln mit Molekulargewichten von 700 bis 300000 unter Verwendung von Bortrifluorid-Phenolat als Katalysator, wobei dieser in situ durch Einleiten von BF₃-Gas in das Reaktionsgemisch erzeugt werden kann.

Die US 4,238,628 offenbart ein Verfahren zur Alkylierung von Benzol, Phenol und Naphthol, mit Polyolefinen aus Monomeren mit mindestens drei Kohlenstoffatomen, bevorzugt Polybuten, in Gegenwart von Bortrifluorid als Katalysator. Vor der Alkylierungsreaktion muss das Olefin-Polymer mit Ethylen zur Reaktion gebracht werden, um eine weitgehende Ethylen-Terminierung zu erhalten. Die Ausbeute an Alkylphenol liegt nur bei 44 bis 64 %.

Die US 4,429,099 offenbart die Alkylierung von Phenol oder substituierten Phenolen mit Bis-(Polyisobuten)benzol oder Tris-(Polyisobuten)benzol mit Molekulargewichten von ca. 700 bis 50000 bzw. ca. 1000 bis 75000. Als Katalysatoren sind unter Anderem BF₃ und BF₃O(C₂H₅)₂ offenbart.

Die WO-A-94/14739 lehrt ein Verfahren zur Herstellung von Polyisobutenylhydroxyaromaten. Bei dem Verfahren wird eine hydroxyaromatische Verbindung mit einem Polyisobuten (PIB) mit einem zahlengemittelten Molekulargewicht von 300 bis 5000, das mindestens 70 % Vinyliden-Terminierung (α-Olefin) enthält, in Gegenwart eines sauren Alkylierungskatalysators umgesetzt. Als geeignete Alkylierungskatalysatoren werden ganz allgemein Lewis-Säuren, Trifluormethansulfonsäure und saure Molekularsiebe genannt. Konkret werden neben Trifluormethansulfonsäure die BF₃-Komplexe mit Diethylether, Phosphorsäure und Phenol eingesetzt.

Kennedy, Guhaniyogi und Percec (Polym. Bull. 8, 563 (1970)) lehren die Verwendung von BF₃-Diethyletherat als Alkylierungskatalysator, wobei das Verhältnis PIB:Phenol 1:2,5 oder 1:1,7 (jeweils bezogen auf die Polyisobutenylendgruppen) beträgt.

Die WO 01/25293 und die WO 01/25294 beschreiben Verfahren zur Herstellung Polyisobutenphenol-haltiger Mannich-Addukte durch Alkylierung einer aromatischen Hydroxyverbindung mit hochreaktivem Polyisobuten bei einer Temperatur unterhalb von 50 °C in Gegenwart eines Alkylierungskatalysators und Umsetzung des so erhaltenen Alkylierungsprodukts mit einer Formaldehydquelle und wenigstens einem Amin in einer Mannich-Reaktion. Als geeignete Alkylierungskatalysatoren werden allgemein Protonensäuren und Lewis-Säuren, unter Anderem Addukte von Bortrifluorid mit C₁-C₆-Alkanolen, Phenolen oder Ethern genannt.

Die WO 03/106595 beschreibt ein Additivkonzentrat für Turbinenkraftstoffe, welches neben einer Vielzahl weiterer Komponenten auch ein Mannich-Addukt aus einem Kohlenwasserstoff-substituierten Phenol, einem Aldehyd und einem Amin enthalten kann.

Die WO 02/26839 beschreibt ein Verfahren zur Herstellung von Polyisobutenylphenolen durch Alkylierung einer aromatischen Hydroxyverbindung mit Polyisobutenen in Gegenwart eines Lewis-sauren Alkylierungskatalysators, wobei zusätzlich ein Ether als Cokatalysator eingesetzt wird, der im Falle von BF₃ als Lewis-Säure ein Molekulargewicht von mindestens 102 g/mol aufweist.

Die WO 02/26840 beschreibt ein Verfahren zur Herstellung von Polyisobutenylphenolen durch Alkylierung einer aromatischen Hydroxyverbindung mit Polyisobutenen in Gegenwart eines Lewis-sauren Alkylierungskatalysators, wobei die Polyisobutene zu wenigstens 35 Mol-% eine β-ständige Doppelbindung aufweisen.

K. U. INGOLD beschreibt in J. Phys. Chem., Bd. 64, 1960, Seiten 1637-1642 die Verwendung von 2,6-di-tert.-butyl-4-substituierten Phenolen zur Verhinderung der Autooxidation von gesättigten Mineralölen.

J. POSPISIL et al. beschreibt in Collection of Czechoslovak chemical communications, Bd. 31, 1. Januar 1996, Seiten 1839-1847 die Additionsprodukte von Triisobuten an Phenol, 4-Methylphenol, 2,6-di-tert.-butyl Phenol und Pyrocatechol und die Verwendung der so erhaltenen Additionsprodukte als Antioxidationsmittel und Stabilisatoren.

Die US 4,708,809 beschreibt eine Schmierstoffzusammensetzung für Zweitaktmotoren, die ein Alkylphenol enthält, das wenigstens eine Kohlenwasserstoffgruppe mit mindestens zehn aliphatischen Kohlenstoffatomen aufweist.

Die DE 199 48 111 A1 beschreibt ein Verfahren zur Herstellung Polyisobutenphenolhaltiger Mannich-Addukte durch Alkylierung eines Phenols mit hochreaktivem Polyisobuten und anschließende Mannich-Adduktbildung, wobei wenigstens ein Amin eingesetzt wird, dass wenigstens eine sekundäre Aminofunktion und keine primäre Aminofunktion aufweist oder wobei die Umsetzung des Alkylierungsproduktes mit wenigstens einem Addukt aus wenigstens einem Amin, das wenigstens eine sekundäre oder primäre Aminofunktion aufweist und Formaldehyd, einem Oligomer des Formaldehyds, einem Polymer des Formaldehyds oder einem Formaldehydäquivalent erfolgt.

Der vorliegenden Erfindung liegt die Aufgabe zugrunde, ein Verfahren zur Alkylierung von substituierten Phenolen mit Polyisobutenen zur Verfügung zu stellen. Das Verfahren soll sich insbesondere zur Alkylierung von Phenolen eignen, die in 2-Position einen Alkylsubstituenten sowie gegebenenfalls weitere Substituenten, insbesondere in der 6-Position aufweisen. Bevorzugt sollen bei der Alkylierungsreaktion im Wesentlichen keine Fragmentierungsreaktionen des Polyisobutens oder des eingesetzten substituierten Phenols stattfinden. Das Verfahren soll sich insbesondere auch zur Alkylierung von Phenolen eignen, die in 2-Position und/oder 6-Position einen verzweigten Alkylsubstituenten, wie Isobutyl oder tert.-Butyl aufweisen.

Überraschenderweise wurde nun gefunden, dass diese Aufgabe durch ein Alkylierungsverfahren gelöst wird, bei dem eine geeignete BF₃-Quelle, die zur Komplexbildung mit der als Edukt eingesetzten 2-Alkylphenolverbindung befähigt ist, als Alkylierungskatalysator eingesetzt wird.

Gegenstand der vorliegenden Erfindung ist ein Verfahren zur Herstellung von 2-Alkyl-polyisobutenylphenolen und deren Mannich-Addukten, bei dem man
a) wenigstens eine aromatische 2-Alkylhydroxyverbindung, die ausgewählt ist unter Verbindungen der allgemeinen Formel I 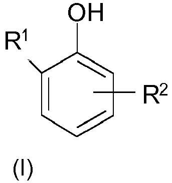 worin
   R¹ für C₁-C₂₀-Alkyl steht und
   R² für Wasserstoff, C₁-C₂₀-Alkyl, Hydroxy oder C₂-C₄₀₀₀-Alkyl, das durch wenigstens eine Gruppierung, die ausgewählt ist unter O, S und NR³, unterbrochen ist, steht, wobei R³ für Wasserstoff, Alkyl, Cycloalkyl oder Aryl steht,
   mit einer katalytisch wirksamen Menge einer BF₃-Quelle, die zur Komplexbildung mit der 2-Alkylhydroxyverbindung befähigt ist, in Kontakt bringt und mit im Wesentlichen einfach ethylenisch ungesättigten und im wesentlichen homopolymeren Polyisobutenen mit einem zahlenmittleren Molekulargewicht Mₙ im Bereich von 200 bis 500000 und enthaltend wenigstens 50 Mol-%, bezogen auf die Gesamtanzahl an Polyisobuten-Makromolekülen, terminal angeordneter Doppelbindungen, die entweder Vinyldoppelbindungen oder Vinyliden-Doppelbindungen sind, alkyliert,
   wobei die in Schritt a) eingesetzte BF₃-Quelle ausgewählt ist unter BF₃-Komplexen mit wenigstens einer der in Schritt a) eingesetzten aromatischen 2-Alkylhydroxyverbindungen.
   Eine Ausführung der Erfindung ist ein Verfahren zur Herstellung von Mannich-Addukten von 2-Alkyl-polyisobutenylphenolen, bei dem man zusätzlich
b) die in Schritt a) erhaltenen 2-Alkyl-polyisobutenylphenole einer Aminoalkylierung unterzieht.

Nicht erfindungsgemäß einsetzbare Katalysatoren sind:
- BF₃-Komplexe mit aliphatischen Ethern, wie Dialkylethern (z. B. Diethylether), Dicycloalkylethern (z. B. Dicyclohexylether) und Tetrahydrofuran,
- BF₃-Komplexe mit Phenol und Arylalkylethern (z. B. Anisol),
- BF₃-Komplexe mit aliphatischen Alkoholen, die mindestens 2 Mol Alkohol pro Mol BF₃ enthalten.

Das erfindungsgemäße Verfahren ermöglicht die Polyisobuten-Alkylierung von Phenolen die in 2-Position bereits einen Alkylsubstituenten sowie gegebenenfalls weitere Substituenten, insbesondere in der 6-Position, aufweisen. Dabei können die bei der Polyisobuten-Alkylierung von solchen Phenolen mit aus dem Stand der Technik bekannten Verfahren auftretenden Nachteile weitgehend vermieden werden. So werden bei der Alkylierungsreaktion im Wesentlichen keine Fragmentierungsreaktionen des Polyisobutens oder des eingesetzten substituierten Phenols beobachtet. Das als Edukt eingesetzte Polyisobuten lässt sich mit hohen Umsätzen zur Alkylierung einsetzen. Die als unerwünschte Nebenreaktion bei der Verwendung von BF₃-Komplexen mit Phenol und Arylalkylethern als Cokatalysatoren auftretende Alkylierung des Cokatalysators wird vermieden. Zudem eignet sich das erfindungsgemäße Verfahren auch zur Alkylierung von Phenolen, die in 2-Position und/oder 6-Position einen verzweigten Alkylsubstituenten, wie Isobutyl oder tert.-Butyl aufweisen. Bei der Polyisobuten-Alkylierung von solchen Phenolen mit aus dem Stand der Technik bekannten Verfahren kommt es im Allgemeinen zu einer teilweisen oder vollständigen Abspaltung der verzweigten Alkylsubstituenten.

Für den Zweck der Erläuterung der vorliegenden Erfindung umfasst der Ausdruck "Alkyl" geradkettige und verzweigte Alkylgruppen. Vorzugsweise handelt es sich dabei um geradkettige oder verzweigte C₁-C₂₀-Alkyl, bevorzugterweise C₁-C₁₀-Alkyl-, besonders bevorzugt C₁-C₈-Alkyl- und ganz besonders bevorzugt C₁-C₄-Alkylgruppen. Beispiele für Alkylgruppen sind insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl- 2-methylpropyl, n-Heptyl, 2-Heptyl, 3-Heptyl, 2-Ethylpentyl, 1-Propylbutyl, n-Octyl, 2-Ethylhexyl, 2-Propylheptyl, Nonyl, Decyl.

Der Ausdruck "Alkyl" umfasst auch substituierte Alkylgruppen, welche im Allgemeinen 1, 2, 3, 4 oder 5, bevorzugt 1, 2 oder 3 und besonders bevorzugt 1 Substituenten aufweisen. Diese sind beispielsweise ausgewählt unter Cycloalkyl, Aryl, Heteroaryl, Halogen, Amino, Alkoxycarbonyl, Acyl, Nitro, Aminocarbonyl, Alkylaminocarbonyl, Dialkylaminocarbonyl, Alkylcarbonylamino, Carboxylat und Sulfonat.

Der Ausdruck "Cycloalkyl" umfasst im Sinne der vorliegenden Erfindung unsubstituierte als auch substituierte Cycloalkylgruppen, vorzugsweise C₅-C₇-Cycloalkylgruppen, wie Cyclopentyl, Cyclohexyl oder Cycloheptyl. Diese können im Falle einer Substitution, im Allgemeinen 1, 2, 3, 4 oder 5, bevorzugt 1, 2 oder 3 Substituenten tragen. Diese Substituenten sind beispielsweise ausgewählt unter Alkyl und den zuvor für substituierte Alkylgruppen genannten Substituenten.

Der Ausdruck "Aryl" umfasst im Sinne der vorliegenden Erfindung unsubstituierte als auch substituierte Arylgruppen, und steht vorzugsweise für Phenyl, Tolyl, Xylyl, Mesityl, Naphthyl, Fluorenyl, Anthracenyl, Phenanthrenyl oder Naphthacenyl, besonders bevorzugt für Phenyl oder Naphthyl. Diese Arylgruppen können im Falle einer Substitution im Allgemeinen 1, 2, 3, 4 oder 5, vorzugsweise 1, 2 oder 3 Substituenten tragen. Diese Substituenten sind beispielsweise ausgewählt unter Alkyl und den zuvor für substituierte Alkylgruppen genannten Substituenten.

Der Ausdruck "Heteroaryl" umfasst im Sinne der vorliegenden Erfindung unsubstituierte oder substituierte, heterocycloaromatische Gruppen, vorzugsweise die Gruppen Pyridyl, Chinolinyl, Acridinyl, Pyridazinyl, Pyrimidinyl, Pyrazinyl, Pyrrolyl, Imidazolyl, Pyrazolyl, Indolyl, Purinyl, Indazolyl, Benzotriazolyl, 1,2,3-Triazolyl, 1,3,4-Triazolyl und Carbazolyl. Diese heterocycloaromatischen Gruppen können im Falle einer Substitution im Allgemeinen 1, 2 oder 3 Substituenten tragen. Diese Substituenten sind beispielsweise ausgewählt unter Alkyl und den zuvor für substituierte Alkylgruppen genannten Substituenten.

Carboxylat und Sulfonat stehen im Rahmen dieser Erfindung vorzugsweise für ein Derivat einer Carbonsäurefunktion bzw. einer Sulfonsäurefunktion, insbesondere für ein Metallcarboxylat oder -sulfonat, eine Carbonsäureester- oder Sulfonsäureesterfunktion oder eine Carbonsäure- oder Sulfonsäureamidfunktion. Dazu zählen z. B. die Ester mit C₁-C₄-Alkanolen, wie Methanol, Ethanol, n-Propanol, Isopropanol, n-Butanol, sec.-Butanol und tert.-Butanol.

Der Ausdruck "Acyl" steht im Sinne der vorliegenden Erfindung für Alkanoyl- oder Aroylgruppen mit im Allgemeinen 2 bis 11, vorzugsweise 2 bis 8 Kohlenstoffatomen, beispielsweise für die Acetyl-, Propanoyl-, Butanoyl-, Pentanoyl-, Hexanoyl-, Heptanoyl-, 2-Ethylhexanoyl-, 2-Propylheptanoyl-, Benzoyl- oder Naphthoyl-Gruppe.

Halogen steht für Fluor, Chlor, Brom und lod, bevorzugt für Fluor, Chlor und Brom.

Die in Schritt a) eingesetzte BF₃-Quelle ist ausgewählt unter BF₃-Komplexen mit wenigstens einer der in Schritt a) eingesetzten aromatischen 2-Alkylhydroxyverbindungen.

Gemäß einer Ausführungsform wird der Alkylierungskatalysator in situ aus der als Edukt eingesetzten aromatischen 2-Alkylhydroxyverbindung und BF₃ gebildet. Dazu kann die hydroxyaromatische Verbindung in einer Reaktionszone in Substanz oder vorzugsweise in Lösung vorgelegt und anschließend das gasförmige BF₃ zugegeben werden.

Gemäß einer anderen Ausführungsform wird der Alkylierungskatalysator zuvor separat aus wenigstens einer der als Edukt eingesetzten aromatischen 2-Alkylhydroxyverbindungen und einer BF₃-Quelle gebildet. Geeignete BF₃-Quellen gemäß dieser Ausführung sind gasförmiges BF₃ und BF₃-Komplexe mit einer geringeren Komplexbildungskonstante als für den BF₃-Komplex mit der als Edukt eingesetzten aromatischen 2-Alkylhydroxyverbindung.

Das zur Alkylierung in Schritt a) eingesetzte Polyisobuten besitzt ein zahlenmittleres Molekulargewicht Mₙ im Bereich von 200 bis 500000, besonders bevorzugt von 200 bis 20000, stärker bevorzugt von 200 bis 5000 und insbesondere von 200 bis 1000. Unter den Begriff "Polyisobuten" fallen im Rahmen der vorliegenden Erfindung auch oligomere Isobutene, wie tetrameres, pentameres, hexameres und heptameres Isobuten.

Als Polyisobuten kann in der Alkylierungsreaktion prinzipiell jedes gängige und kommerziell erhältliche Polyisobuten eingesetzt werden.

Erfindungsgemäß wird zur Alkylierung in Schritt a) ein so genanntes "reaktives" Polyisobuten eingesetzt. "Reaktive" Polyisobutene unterscheiden sich von den "niedrigreaktiven" Polyisobutenen durch den Gehalt an terminal angeordneten Doppelbindungen. So enthalten reaktive Polyisobutene wenigstens 50 Mol-%, bezogen auf die Gesamtanzahl an Polyisobuten-Makromolekülen, terminal angeordnete Doppelbindungen. Besonders bevorzugt sind Polyisobutene mit wenigstens 60 Mol-% und insbesondere mit wenigstens 80 Mol-%, bezogen auf die Gesamtanzahl an Polyisobuten-Makromolekülen, terminal angeordneten Doppelbindungen. Bei den terminal angeordneten Doppelbindungen kann es sich sowohl um Vinyldoppelbindungen [-CH=C(CH₃)₂] (β-Olefin) als auch um Vinyliden-Doppelbindungen [-CH₂-C(=CH₂)-CH₃] (α-Olefin) handeln. Außerdem werden zur Alkylierung im Wesentlichen homopolymere Polyisobutene eingesetzt, die einheitliche Polymergerüste aufweisen. Darunter werden im Rahmen der vorliegenden Erfindung solche Polyisobutene verstanden, die zu wenigstens 85 Gew.-%, vorzugsweise zu wenigstens 90 Gew.-% und besonders bevorzugt zu wenigstens 95 Gew.-% aus Isobuteneinheiten [-CH₂C(CH₃)₂-] aufgebaut sind.

Weiterhin weisen die in Schritt a) eingesetzten Polyisobutene vorzugsweise einen Polydispersitätsindex (PDI) von 1,05 bis 10 auf. Unter Polydispersität versteht man den Quotienten aus gewichtsmittlerem Molekulargewicht M_{w} und zahlenmittlerem Molekulargewicht Mₙ (PDI = M_{w}/Mₙ). Die Wahl der zur Alkylierung eingesetzten Polyisobutene mit einem bestimmtem PDI wird vom Verwendungszweck der Alkylierungsprodukte bzw. deren Mannich-Addukten bestimmt. Im Allgemeinen korreliert dabei der PDI-Wert bei gegebenem Mₙ mit der Viskosität. Entsprechend wählt man für Anwendungen, in denen eine leichte Mischbarkeit oder Verarbeitbarkeit mit dem Anwendungsmedium und damit eine geringe Viskosität gefordert ist, ein Polyisobuten mit einem PDI von vorzugsweise höchstens 3,0. Für Oberflächenmodifikationen in Form von Beschichtungen ist hingegen häufig eine höhere Viskosität erwünscht, so dass in diesem Fall Polyisobutene mit einem PDI im Bereich von 1,5 bis 10 bevorzugt sind.

2-Alkyl-polyisobutenylphenole mit Polyisobutenresten mit einer engen Molekulargewichtsverteilung (PDI etwa 1,05 bis etwa 3,0, vorzugsweise etwa 1,05 bis etwa 2,0) des Polyisobutenrests sind beispielsweise zur Verwendung als Detergenz oder Dispergator in Kraftstoff- und Schmierstoffzusammensetzungen, als Additiv in Drucksystemen, in Polymeren oder in Monolayern für die Hydrophobierung geeignet. 2-Alkyl-polyisobutenylphenole mit Polyisobutenresten mit einer mittleren Molekulargewichtsverteilung (PDI etwa 1,6 bis etwa 2,5) sind beispielsweise zur Verwendung in Emulsionen oder Dispersionen sowie zur Hydrophobierung von basischen Materialien, wie Calciumcarbonat (z. B. in Form von Mörtel), Gips oder Zement geeignet, während solche mit einer breiten Molekulargewichtsverteilung (PDI des Polyisobutenrests von etwa 2,1 bis etwa 10) für die Verwendung als Korrosionsinhibitoren oder ebenfalls zur Hydrophobierung von basischen Materialien geeignet sind.

Unter Polyisobutenen werden im Rahmen der vorliegenden Erfindungen auch alle durch kationische Polymerisation erhältlichen Polymerisate verstanden, die vorzugsweise wenigstens 60 Gew.-% Isobuten, besonders bevorzugt wenigstens 80 Gew.-%, stärker bevorzugt wenigstens 90 Gew.-% und insbesondere wenigstens 95 Gew.-% Isobuten einpolymerisiert enthalten. Daneben können die Polyisobutene weitere Butenisomere, wie 1- oder 2-Buten sowie davon verschiedene olefinisch ungesättigte Monomere, die mit Isobuten unter kationischen Polymerisationsbedingungen copolymerisierbar sind, einpolymerisiert enthalten.

Als Isobuten-Einsatzstoffe für die Herstellung von Polyisobutenen, die als Edukte für das erfindungsgemäße Verfahren geeignet sind, eignen sich dementsprechend sowohl Isobuten selbst als auch isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalyzed Cracking), sofern sie weitgehend von darin enthaltenem 1,3-Butadien befreit sind. Besonders geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial übernehmen die von Isobuten verschiedenen Kohlenwasserstoffe die Rolle eines inerten Lösungsmittels.

Als copolymerisierbare Monomere kommen Vinylaromaten wie Styrol und α-Methylstyrol, C₁-C₄-Alkylstyrole wie 2-, 3- und 4-Methylstyrol, sowie 4-tert.-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1 in Betracht. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(methoxyethoxy)silyl]-2-methylpropen-2.

Geeignete Polyisobutene sind alle durch gängige kationische oder lebende kationische Polymerisation erhältlichen Polyisobutene. Bevorzugt sind jedoch so genannte "reaktiven" Polyisobutene, die vorstehend bereits beschrieben wurden.

Geeignete Polyisobutene sind beispielsweise die Glissopal-Marken der BASF Aktiengesellschaft, so z. B. Glissopal 550, Glissopal 1000 und Glissopal 2300, sowie die Oppanol-Marken der BASF Aktiengesellschaft, wie Oppanol B10, B12 und B15.

Verfahren zur Herstellung von geeigneten Polyisobutenen sind bekannt, beispielsweise aus der DE-A 27 02 604, EP-A 145 235, EP-A 481 297, EP-A 671 419, EP-A 628 575, EP-A807 641 und WO 99/31151. Polyisobutene, die durch lebende kationische Polymerisation von Isobuten bzw. Isobuten-haltigen Monomerengemischen hergestellt werden, sind beispielsweise in US 4,946,899, US 4,327,201, US 5,169,914, EP-A 206 756, EP-A 265 053, WO 02/48216 und in J. P. Kennedy, B. Ivan, "Designed Polymers by Carbocationic Macromolecular Engineering", Oxford University Press, New York 1991 beschrieben. Auf diese und andere Publikationen, die Polyisobutene beschreiben, wird hiermit in vollem Umfang Bezug genommen.

Je nach Polymerisationsverfahren beträgt der Polydispersitätsindex (PDI= M_{w}/Mₙ) der erhaltenen Polyisobutene etwa 1,05 bis 10. Polymere aus der lebenden kationischen Polymerisation weisen in der Regel einen PDI von etwa 1,05 bis 2,0 auf. Die Molekulargewichtsverteilung der in dem erfindungsgemäßen Verfahren eingesetzten Polyisobutene wirkt sich direkt auf die Molekulargewichtsverteilung der 2-Alkyl-polyisobutenylphenole aus. Wie schon ausgeführt, wählt man je nach Verwendungszweck zur Alkylierung Polyisobutene mit einer niedrigen, einer mittleren oder einer breiten Molekulargewichtsverteilung aus.

Die zur Alkylierung in Schritt a) eingesetzte aromatische 2-Alkylhydroxyverbindung ist ausgewählt unter Verbindungen der allgemeinen Formel I 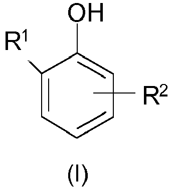 worin
R¹ für C₁-C₂₀-Alkyl steht und
R² für Wasserstoff, C₁-C₂₀-Alkyl, Hydroxy oder C₂-C₄₀₀₀-Alkyl, das durch wenigstens eine Gruppierung, die ausgewählt ist unter O, S und NR³, unterbrochen ist, steht, wobei R³ für Wasserstoff, Alkyl, Cycloalkyl oder Aryl steht.

In einer bevorzugten Ausführung steht der Rest R² für Wasserstoff. In einer weiteren bevorzugten Ausführung steht der Rest R² für einen von Wasserstoff verschiedenen Rest, der in 6-Position an den Benzolring gebunden ist. Bevorzugt steht R² dann für einen Alkylrest gemäß der eingangs gegebenen Definition.

Bevorzugte Verbindungen der Formel I sind o-Kresol, 2-Ethylphenol, 2-(n-Propyl)phenol, 2-(n-Butyl)phenol, 2,3-, 2,4-, 2,5- und 2,6-Dimethylphenol, 2,3-, 2,4-, 2,5- und 2,6-Diethylphenol, 2,3-, 2,4-, 2,5- und 2,6-Di(n-propyl)phenol, 2,3-, 2,4-, 2,5- und 2,6-Di(n-Butyl)phenol.

Das erfindungsgemäße Verfahren eignet sich speziell zur Alkylierung von Phenolen, die in 2-Position und/oder 6-Position einen verzweigten Alkylsubstituenten aufweisen. Dazu zählen vorzugsweise 2-Alkylhydroxyverbindungen der allgemeinen Formel I, wobei R¹ und/oder R² für einen C₃-C₂₀-Alkylrest stehen, der wenigstens ein tertiäres oder quartäres Kohlenstoffatom aufweist. Geeignete C₃-C₂₀-Alkylreste, die wenigstens ein tertiäres oder quartäres Kohlenstoffatom aufweisen sind Isopropyl, 2-Butyl, sec.-Butyl, tert.-Butyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl- 2-methylpropyl, 2-Heptyl, 3-Heptyl, 2-Ethylpentyl, 1-Propylbutyl, 2-Ethylhexyl, 2-Propylheptyl, etc. Bevorzugte C₃-C₂₀-Alkylreste sind Isopropyl und tert.-Butyl.

Bevorzugte Phenole, die in 2-Position und/oder 6-Position einen verzweigten Alkylsubstituenten aufweisen sind 2-Isopropylphenol, 2-(tert.-Butyl)phenol, 2,6-Diisopropylphenol und 2,6-Di(tert.-Butyl)phenol.

Vorteilhafterweise ermöglicht das erfindungsgemäße Verfahren die im Wesentlichen selektive Polyisobuten-Monoalkylierung der zur Alkylierung in Schritt a) eingesetzten aromatischen 2-Alkylhydroxyverbindung. Nach dem erfindungsgemäßen Verfahren werden in der Regel 2-Alkyl-polyisobutenylphenole erhalten, die (sofern das eingesetzte Edukt mehrfache Alkylierungen zulässt) zu höchstens 20 Mol-%, bevorzugt höchstens 10 Mol-%, insbesondere höchstens 5 Mol-%, mehr als einfach mit dem Polyisobuten alkyliert sind. Aus den zuvor genannten bevorzugten Phenolen, die in 2-Position und/oder 6-Position einen Alkylsubstituenten aufweisen, werden dabei im Wesentlichen selektiv die in 4-Position mit Polyisobuten alkylierten Verbindungen erhalten.

Vorteilhafterweise ermöglicht das erfindungsgemäße Verfahren die im Wesentlichen selektive Polyisobuten-Alkylierung, ohne dass große Überschüsse an der aromatischen 2-Alkylhydroxyverbindung eingesetzt werden müssen. Vorzugsweise werden aromatische 2-Alkylhydroxyverbindung und Polyalkene in einem Molmengenverhältnis von 5:1 bis 1:1, besonders bevorzugt 2,5:1 bis 1:1, insbesondere bevorzugt 2:1 bis 1:1 eingesetzt. Selbstverständlich ist jedoch auch ein Überschuss der aromatischen 2-Alkylhydroxyverbindung von 100 % und mehr geeignet. Die Molmenge an aromatischer 2-Alkylhydroxyverbindung versteht sich dabei als effektiv zur Alkylierung zur Verfügung stehende Menge (d. h. abzüglich der bei der Bildung des Katalysators zur Komplexbildung mit BF₃ verbrauchten Menge).

In der Regel werden 1 bis 30 Mol-% der BF₃-Quelle, bezogen auf die aromatische 2-Alkylhydroxyverbindung, eingesetzt. In speziellen Fällen können größere Mengen wie 50 oder 80 Mol-% eingesetzt werden, z. B. um höhere Reaktionsgeschwindigkeiten zu erzielen.

Das erfindungsgemäße Verfahren kann lösungsmittelfrei durchgeführt werden. Bevorzugt ist jedoch die Verwendung eines Kohlenwasserstoffs wie eines n-Alkans oder deren Gemischen als Lösungsmittel. Wegen ihrer geringen Reaktivität gegenüber der Alkylierung mit Polyisobutenen können auch Alkylaromaten oder Gemische davon eingesetzt werden. Besonders vorteilhaft werden hierbei Aromaten wie Toluol, Ethylbenzol, o-Xylol, m-Xylol, p-Xylol, die Isomeren Trimethylbenzole oder Gemische davon (z. B. die von Exxon Company als "Aromatic 100" oder "Aromatic 150" verkauften Gemische) eingesetzt. In diesen Lösungsmitteln kann in der Regel auch eine etwaige weitere Umsetzung in Schritt b) stattfinden oder kann das Produkt in den Handel gebracht werden.

Bevorzugt erfolgt die Umsetzung in Schritt a) bei einer Temperatur im Bereich von höchstens 40 °C, bevorzugt von höchstens 30 °C. Dies gilt sowohl für das Inkontaktbringen der aromatischen 2-Alkylhydroxyverbindung mit der BF₃-Quelle als auch die Alkylierung mit den Polyisobutenen. Dabei kann das Inkontaktbringen der aromatischen 2-Alkylhydroxyverbindung mit der BF₃-Quelle auch bei einer niedrigeren Temperatur von höchstens 20 °C, bevorzugt von höchstens 10 °C erfolgen.

Die Reaktion in Schritt a) wird üblicherweise bei Atmosphärendruck durchgeführt, kann aber auch bei höheren oder geringeren Drücken durchgeführt werden.

Die Reihenfolge der Zugabe der Reaktionskomponenten ist grundsätzlich nicht wesentlich. Es hat sich jedoch als vorteilhaft erwiesen, die aromatische 2-Alkylhydroxyverbindung in Substanz oder in Lösung vorzulegen, die BF₃-Quelle als gasförmiges BF₃ als Addukt oder als Gemisch mit einem Alkohol, wie zuvor beschrieben, zuzugeben und schließlich das Polyisobuten, ebenfalls in Substanz oder in Lösung zuzugeben. Die Reaktion kann mittels eines Alkanols, beispielsweise Methanol, abgebrochen werden. Zur Aufarbeitung kann mit Wasser, Alkanolen oder Wasser-Alkanol-Gemischen gewaschen, anschließend die organische Phase nach üblichen Verfahren getrocknet werden, z. B. über Natriumsulfat oder Magnesiumsulfat, und das Lösungsmittel entfernt werden.

Die in Schritt a) des erfindungsgemäßen Verfahrens erhaltenen 2-Alkyl-polyisobutenylphenole eignen sich für eine Vielzahl technischer Anwendungen und insbesondere zur Stabilisierung von unbelebtem organischen Material gegen die Einwirkung von Licht, Sauerstoff und Wärme, als Kraftstoffadditive sowie als Zwischenprodukte für die Herstellung von Kraftstoffdetergenzien. Auf diese Einsatzbereiche wird im Folgenden bei den erfindungsgemäßen Zusammensetzungen noch näher eingegangen.

Die in Schritt a) des erfindungsgemäßen Verfahrens erhaltenen 2-Alkyl-polyisobutenylphenole können als Folgeumsetzung einer Aminoalkylierung in Schritt b) unterzogen werden. Geeignete Verfahren zur Herstellung von Polyisobutenylphenol-haltigen Mannichaddukten sind dem Fachmann prinzipiell bekannt und werden z. B. in der EP-A-0 831 141, WO 01/25293 und WO 01/25294 beschrieben, worauf hier in vollem Umfang Bezug genommen wird.

Bevorzugt werden zur Umsetzung in Schritt b) die Polyisobuten-Alkylierungsprodukt von Verbindungen der allgemeinen Formel I eingesetzt, worin R¹ für einen C₁-C₂₀-Alkylrest und R² für Wasserstoff steht. In einer speziellen Ausführung werden die Polyisobuten-Alkylierungsprodukte von Verbindungen der allgemeinen Formel I eingesetzt, worin R¹ für einen C₃-C₂₀-Alkylrest stehen, der wenigstens ein tertiäres oder quartäres Kohlenstoffatom aufweist.

Zur Aminoalkylierung kann das unter a) erhaltene Reaktionsprodukt unter b) mit einem Aldehyd, vorzugsweise Formaldehyd oder einem Oligomer oder Polymer davon, und wenigstens einem Amin, das wenigstens eine primäre oder wenigstens eine sekundäre Aminofunktion aufweist, umgesetzt werden. Möglich ist auch die Umsetzung des unter a) erhaltenen Reaktionsprodukts mit einem Addukt aus primären Aminen mit Formaldehyd, wie Hexahydrotriazinen, z. B. Triphenylhexahydrotriazin. Diese Reaktion wird in im Folgenden auch als Mannich-Reaktion bezeichnet.

Bevorzugte Aldehyde sind Formaldehyd, Formalinlösungen, Formaldehydoligomere, z. B. Trioxan, oder Polymere des Formaldehyds, wie Paraformaldehyd. Selbstverständlich kann man auch gasförmiges Formaldehyd einsetzen.

Geeignete Amine weisen wenigstens eine primäre oder sekundäre Aminofunktion auf. Primäre Aminofunktionen im Sinne dieser Erfindung sind Aminofunktionen der Formel HNR⁴R⁵, wobei einer der Reste R⁴ oder R⁵ für ein Wasserstoffatom steht und der andere Rest unter von Wasserstoff verschiedenen Substituenten ausgewählt ist.

Sekundäre Aminofunktionen im Sinne dieser Erfindung sind Aminofunktionen der Formel HNR⁴R⁵, wobei die Reste R⁴ und R⁵ unter von Wasserstoff verschiedenen Substituenten ausgewählt sind.

Vorzugsweise sind die Reste R⁴ und R⁵ ausgewählt unter Wasserstoff, C₁-C₂₀-Alkyl-, C₃-C₈-Cycloalkyl- und C₁-C₂₀-Alkoxyresten, die durch Heteroatome, ausgewählt unter N und O, unterbrochen und/oder substituiert sein können, wobei die Heteroatome wiederum Substituenten, vorzugsweise ausgewählt unter H, C₁-C₆-Alkyl, Aryl und Heteroaryl, tragen können; oder R⁴ und R⁵ bilden gemeinsam mit dem N-Atom, an das sie gebunden sind, einen 5- oder 6-gliedrigen Cyclus, der ein oder zwei Heteroatome, ausgewählt unter N und O aufweisen und mit einem, zwei oder drei C₁-C₆-Alkylresten substituiert sein kann. Weiterhin können R⁴ und R⁵ auch für Aryl- und Heteroarylreste stehen. Aryl- und Heteroarylreste weisen gegebenenfalls einen bis drei Substituenten, ausgewählt z. B. unter Hydroxy und den vorgenannten Alkyl-, Cycloalkyl- oder Alkoxyresten und Polyisobutenresten, auf.

Geeignete Reste R⁴, R⁵ sind beispielsweise Wasserstoff, Methyl, Ethyl, n-Propyl, sek.-Propyl, Isopropyl, n-Butyl, iso-Butyl, sek.-Butyl, tert.-Butyl, n-Pentyl und n-Hexyl, 5-, 6- und 7-gliedrige gesättigte, ungesättigte oder aromatischen Carbo- und Heterocyclen, wie Cyclopentyl, Cyclohexyl, Phenyl, Toloyl, Xylyl, Cycloheptyl, Naphthyl, Tetrahydrofuranyl, Tetrahydropyranyl, Dioxanyl, Pyrrolidyl, Piperidyl, Pyridyl und Pyrimidyl.

Geeignete Verbindungen der Formel HNR⁴R⁵, die ausschließlich eine primäre Aminofunktion aufweisen, sind beispielsweise Methylamin, Ethylamin, n-Propylamin, Isopropylamin, n-Butylamin, iso-Butylamin, sek.-Butylamin, tert.-Butylamin, Pentylamin, Hexylamin, Cyclopentylamin, Cyclohexylamin, Anilin und Benzylamin.

Geeignete Verbindungen der Formel HNR⁴R⁵, die ausschließlich eine primäre Aminofunktion aufweisen und bei denen der Rest R⁴ oder R⁵ für durch das Heteroatom O unterbrochene und/oder substituierte Alkylreste steht, sind beispielweise CH₃-O-C₂H₄-NH₂, C₂H₅-O-C₂H₄-NH₂, CH₃-O-C₃H₆-NH₂, C₂H₅-O-C₃H₆-NH₂, n-C₄H₉-O-C₄H₈-NH₂, HO-C₂H₄-NH₂, HO-C₃H₇-NH₂ und HO-C₄H₈-NH₂.

Geeignete Verbindungen der Formel HNR⁴R⁵, die ausschließlich eine sekundäre Aminofunktion aufweisen, sind beispielweise Dimethylamin, Diethylamin, Methylethylamin, Di-n-propylamin, Diisopropylamin, Diisobutylamin, Di-sek.-butylamin, Di-tert.-butylamin, Dipentylamin, Dihexylamin, Dicyclopentylamin, Dicyclohexylamin und Diphenylamin.

Geeignete Verbindungen der Formel HNR⁴R⁵, die ausschließlich eine sekundäre Aminofunktion aufweisen und bei denen der Rest R⁴ und R⁵ für durch das Heteroatom O unterbrochene und/oder substituierte Alkylreste steht, sind beispielweise (CH₃-O-C₂H₄)₂NH, (C₂H₅-O-C₂H₄)₂NH, (CH₃-O-C₃H₆)₂NH, (C₂H₅-O-C₃H₆)₂NH, (n-C₄H₉-O-C₄H₈)₂NH, (HO-C₂H₄)₂NH, (HO-C₃H₆)₂NH und (HO-C₄H₈)₂NH.

Geeignete Verbindungen der Formel HNR⁴R⁵, bei denen R⁴ und R⁵ gemeinsam mit dem N-Atom, an das sie gebunden sind, einen 5-, 6- oder 7-gliedrigen Cyclus bilden, der ein oder zwei Heteroatome, ausgewählt unter N und O, aufweisen und mit einem, zwei oder drei C₁-C₆-Alkylresten substituiert sein kann, sind beispielsweise Pyrrolidin, Piperidin, Morpholin und Piperazin sowie deren substituierte Derivate, wie N-C₁-C₆-Alkylpiperazine und Dimethylmorpholin.

Geeignete Verbindungen der Formel HNR⁴R⁵, die durch N unterbrochene und/oder substituierte Alkylreste aufweisen, sind Alkylendiamine, Dialkylentriamine, Trialkylentetramine und Polyalkylenpolyamine, wie Oligo- oder Polyalkylenimine, insbesondere Oligo- oder Polyethylenimine, bevorzugt Oligoethylenimine, bestehend aus 2 bis 20, vorzugsweise 2 bis 10 und besonders bevorzugt 2 bis 6 Ethylenimineinheiten. Geeignete solche Verbindungen sind insbesondere n-Propylendiamin, 1,4-Butandiamin, 1,6-Hexandiamin, Diethylentriamin, Triethylentetramin und Polyethylenimine, sowie deren Alkylierungsprodukte, die wenigstens eine primäre oder sekundäre Aminofunktion aufweisen, z. B. 3-(Dimethylamino)-n-propylamin, N,N-Dimethylethylendiamin, N,N-Diethylethylendiamin und N,N,N',N'-Tetramethyldiethylentriamin. Ebenfalls geeignet ist Ethylendiamin.

Weitere geeignete Verbindungen der Formel HNR⁴R⁵ sind die Umsetzungsprodukte von Alkylenoxiden, insbesondere Ethylenoxid, mit primären Aminen, sowie Copolymerisate von Ethylenoxid mit Ethylenimin und/oder primären oder sekundären C₁-C₆-Alkylaminen.

Bevorzugte Verbindungen der Formel HNR⁴R⁵ sind 3-(Dimethylamino)-n-propylamin, Di[3-(dimethylamino)-n-propyl]amin, Di[3-(diethylamino)-n-propyl]amin, Di[2-(dimethylamino)ethyl]amin, Dimethylamin, Diethylamin, Di-n-propylamin, Diisopropylamin, Dicyclohexylamin, Pyrrolidin, Piperidin, Morpholin, Dimethylmorpholin, N-Methylpiperazin, HO-C₂H₄-NH₂, (HO-C₂H₄)₂NH, H₃C-O-(CH₂)₂-NH₂, H₃C-O-(CH₂)₃-NH₂, Diethylentriamin, Triethylentetramin, N,N-Diethylethylendiamin, N,N,N',N'-Tetramethyldiethylentriamin und Polyethylenimine.

Besonders bevorzugte Verbindungen der Formel HNR⁴R⁵ sind 3-(Dimethylamino)-n-propylamin, Di[3-(dimethylamino)-n-propyl]amin, Dimethylamin, Diethylamin, Ethylendiamin, Diphenylamin und Morpholin.

Bei der (Mannich-)Reaktion entsteht Reaktionswasser. In der Regel wird dieses aus dem Reaktionsgemisch entfernt. Das Reaktionswasser kann während der Reaktion, am Ende der Reaktionszeit oder nach beendeter Reaktion entfernt werden, beispielsweise destillativ. Vorteilhaft lässt sich das Reaktionswasser durch Erhitzen des Reaktionsgemisches in Gegenwart von Schleppmitteln entfernen. Geeignet als Schleppmittel sind beispielsweise organische Lösungsmittel, die mit Wasser ein Azeotrop bilden und/oder einen Siedepunkt oberhalb des Siedepunktes von Wasser aufweisen.

Besonders geeignete Schleppmittel sind Paraffine, Benzol und Alkylaromaten, insbesondere Toluol, Xylole und Mischungen von Alkylaromaten mit anderen (hochsiedenden) Kohlenwasserstoffen. In der Regel wird das Entfernen des Reaktionswasser bei einer Temperatur durchgeführt, die in etwa dem Siedepunkt des Schleppmittels oder des Azeotrops aus Wasser und Schleppmittel entspricht.

Geeignete Temperaturen für das Entfernen des Reaktionswassers liegen daher bei Normaldruck im Bereich von 75 bis 200 °C, bevorzugt 80 bis 180 °C, und besonders bevorzugt im Bereich von 80 bis 150 °C. Wird das Reaktionswasser bei vermindertem Druck entfernt, sind die Temperaturen entsprechend den erniedrigten Siedetemperaturen zu verringern.

Geeignete Reaktionstemperaturen für die Mannich-Reaktion liegen vorzugsweise im Bereich von 10 bis 200 °C, insbesondere im Bereich von 20 bis 180 °C, z. B. etwa 35 °C, etwa 90 °C, etwa 120 °C oder etwa 140 °C.

In einer bevorzugten Ausführungsform wird die Mannich-Reaktion und das Entfernen des Reaktionswassers etwa bei Atmosphärendruck und einer Temperatur von etwa 80 °C, etwa 110 °C oder etwa 130 °C mit aromatischen Lösungsmitteln, vorzugsweise Toluol, Xylolen oder Gemischen davon, als Schleppmittel durchgeführt. Die Mannich-Reaktion wird vorzugsweise so durchgeführt, dass die Reaktanden in einem Temperaturbereich zwischen 10 und 50 °C zusammengegeben, gegebenenfalls in diesem Temperaturbereich vermischt und anschließend auf die zur destillativen Entfernung des Reaktionswassers nötige Temperatur gebracht werden.

Bei der unter b) durchgeführten Mannich-Reaktion setzt man in der Regel 0,5 bis 3,0 Mol, vorzugsweise 0,5 bis 2,0 Mol und insbesondere 0,8 bis 1,5 Mol Aldehyd, sowie 0,5 bis 3,0 Mol, vorzugsweise 0,5 bis 2,0 Mol und insbesondere 0,8 bis 1,5 Mol Amin, bezogen auf 1 Mol 2-Alkyl-polyisobutenylphenol aus a) ein.

Das erfindungsgemäße Verfahren eignet sich erstmals zur Alkylierung von Phenolen, die in 2-Position und/oder 6-Position einen verzweigten Alkylsubstituenten tragen in sehr hohen Ausbeuten, sowie zur Herstellung von Mannich-Addukten davon. Ein weiterer Gegenstand der Erfindung ist daher eine Zusammensetzung, enthaltend wenigstens ein 2-Alkyl-polyisobutenylphenol und/oder wenigstens ein Mannich-Addukt davon, erhältlich durch ein Verfahren, wie zuvor beschrieben. Vorzugsweise handelt es sich um eine Zusammensetzung, die durch Alkylierung wenigstens einer aromatischen 2-Alkylhydroxyverbindung der allgemeinen Formel I erhältlich ist, worin R¹ und/oder R² für einen C₃-C₂₀-Alkylrest stehen, der wenigstens ein tertiäres oder quartäres Kohlenstoffatom aufweist. Insbesondere weist die erfindungsgemäße Zusammensetzung mindestens 90 Gew.-%, besonders bevorzugt wenigstens 95 Gew.-% wenigstens eines 2-Alkyl-polyisobutenylphenol und/oder wenigstens eines Mannich-Addukts davon auf.

Die nach dem erfindungsgemäßen Verfahren erhältlichen 2-Alkyl-polyisobutenylphenole und deren Mannich-Addukte sowie die erfindungsgemäßen Zusammensetzungen eignen sich vorteilhaft zur Stabilisierung von unbelebtem organischen Material gegen die Einwirkung von Licht, Sauerstoff und Wärme. Bevorzugt werden für diese Verwendung 2-Alkyl-polyisobutenylphenole und Mannich-Addukte davon eingesetzt, die in 2-Position und/oder 6-Position einen verzweigten Alkylsubstituenten aufweisen. Dazu zählen vorzugsweise 2-Isopropyl-4-polyisobutenylphenol, 2-(tert.-Butyl)-4-polyisobutenylphenol, 2,6-Diisopropyl-4-polyisobutenylphenol und 2,6-Di(tert.-Butyl)-4-polyisobutenylphenol sowie deren Mannich-Addukte.

Die mechanischen, chemischen und/oder ästhetischen Eigenschaften von unbelebtem organischen Material, z. B. von Kunststoffen und Lacken, werden bekanntermaßen durch die Einwirkung von Licht, Sauerstoff und Wärme verschlechtert. Diese Verschlechterung zeigt sich üblicherweise als Vergilbung, Verfärbung, Rissbildung oder Versprödung des Materials. Mit Stabilisatoren oder Stabilisatorzusammensetzungen, die wenigstens ein 2-Alkyl-polyisobutenylphenol und/oder Mannich-Addukt davon enthalten, wird ein guter Schutz gegen die Beeinträchtigung von organischem Material durch Licht, Sauerstoff und Wärme erzielt. Dies gilt insbesondere für 2-Alkyl-polyisobutenylphenole und Mannich-Addukte davon, die in 2-Position und/oder 6-Position einen verzweigten Alkylsubstituenten aufweisen.

Die eingesetzten Komponenten liegen bei Raumtemperatur im Allgemeinen als viskose Flüssigkeiten vor und kann daher leicht in das zu stabilisierende Material eingearbeitet und homogen verteilt werden.

Die 2-Alkyl-polyisobutenylphenole und/oder deren Mannich-Addukte werden dem zu stabilisierenden organischen Material in der Regel in einer Konzentration von 0,005 bis 5 Gew.-%, bevorzugt 0,01 bis 5 Gew.-%, besonders bevorzugt von 0,01 bis 2 Gew.-%, insbesondere von 0,05 bis 1 Gew.-%, bezogen auf das organische Material vor, während oder nach seiner Herstellung zugesetzt.

Unter unbelebtem organischen Material sind beispielsweise kosmetische Präparate, wie Salben und Lotionen, Arzneimittelformulierungen, wie Pillen und Zäpfchen, photographische Aufzeichnungsmaterialien, insbesondere photographische Emulsionen, Anstrichmittel und Kunststoffe zu verstehen. Dazu zählen weiterhin Mineralöle, z. B. Dieselkraftstoff, Ottokraftstoff, Motor- oder Schmieröle, Schmierfette. Als Kunststoffe, die durch die erfindungsgemäßen Stabilisatoren stabilisiert werden können, seien beispielsweise genannt:
Polymere von Mono- oder Diolefinen, wie z. B. Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren;
Polystyrol sowie Copolymere von Styrol oder α-Methylstyrol mit Dienen und/oder Acrylderivaten, wie z. B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS); halogenhaltige Polymere, wie z. B. Polyvinylchlorid, Polyvinylfluorid, Polyvinylidenfluorid sowie deren Copolymere;
Polymere, die sich von α,β-ungesättigten Säuren und deren Derivaten ableiten, wie Polyacrylate, Polymethacrylate, Polyacrylamide und Polyacrylnitrile;
Polymere, die sich von ungesättigten Alkoholen und Aminen bzw. von deren Acylderivaten oder Acetalen ableiten, z. B. Polyvinylalkohol und Polyvinylacetat;
Polyurethane, Polyamide, Polyharnstoffe, Polyphenylenether, Polyester, Polycarbonate, Polysulfone, Polyethersulfone und Polyetherketone.

Zu den Anstrichmitteln, die mit den erfindungsgemäßen Stabilisatoren stabilisiert werden können, zählen unter anderem Lacke, wie Alkydharzlacke, Dispersionslacke, Epoxydharzlacke, Polyurethanlacke, Acrylharzlacke, Cellulosenitratlacke, oder Lasuren, wie Holzschutzlasuren.

Diese Stabilisatoren sind besonders geeignet zur Stabilisierung von Polyurethanen, insbesondere thermoplastischen Polyurethanen. Die nach Schritt a) des erfindungsgemäßen Verfahrens erhältlichen 2-Alkyl-polyisobutenylphenole sowie die erfindungsgemäßen Zusammensetzungen eignen sich vorteilhaft als Kraftstoffadditive und zur Herstellung von Kraftstoffdetergenzien. Die nach Schritt b) des erfindungsgemäßen Verfahrens erhältlichen Mannich-Addukte eines 2-Alkyl-polyisobutenylphenols und deren Zusammensetzungen eignen sich vorteilhaft als Detergensadditiv in Kraft- und Schmierstoffzusammensetzungen.

Ein weiterer Gegenstand der Erfindung ist eine Kraftstoffzusammensetzung, enthaltend eine Hauptmenge eines flüssigen Kohlenwasserstoffkraftstoffs sowie wenigstens ein 2-Alkyl-Polyisobutenylphenol und/oder ein Mannich-Addukt davon.

Die erfindungsgemäß erhältlichen 2-Alkyl-polyisobutenylphenole und ihre Mannich-Addukte werden den Kraftstoffen, die vorzugsweise unter Ottokraftstoffen und Dieselkraftstoffen und insbesondere unter Ottokraftstoffen ausgewählt sind, in einer Konzentration von vorzugsweise 0,1 bis 40000 Gew.-ppm zugesetzt. Die Verwendung der erfindungsgemäßen 2-Alkyl-polyisobutenylphenole und ihrer Mannich-Addukte in Kraftstoffen und insbesondere in Ottokraftstoffen führt zu einer Verbesserung der Eigenschaften des Motorenöls (Schmieröl; lubricating oil) von Verbrennungsmotoren, in welches sie während des Motorenbetriebs gelangen. Insbesondere verbessern sie die stabilisierenden (vor allem die antioxidativen) und reibverschleißvermindernden Eigenschaften des Motorenöls sowie dessen Viskosität. Außerdem können sie zu einem reduzierten Kraftstoffverbrauch führen. Geeigneterweise geht man bei der Verwendung der erfindungsgemäßen 2-Alkyl-polyisobutenylphenole und ihrer Mannich-Addukte in Kraftstoffen zur Verbesserung der Eigenschaften des Motorenöls (Schmieröls) von Verbrennungsmotoren analog zu bekannten Verfahren des Stands der Technik vor, wie sie beispielsweise in WO 03/091365 oder WO 94/22988 beschrieben sind, auf deren Inhalt in vollem Umfang Bezug genommen wird.

Ein weiterer Gegenstand der Erfindung ist eine Schmierstoffzusammensetzung, enthaltend eine Hauptmenge eines flüssigen, halbfesten oder festen Schmierstoffs sowie eine detergenzaktive Menge wenigstens eines 2-Alkyl-polyisobutenylphenols und/oder eines Mannich-Addukts davon.

Die zuvor beschriebenen erfindungsgemäßen Zusammensetzungen eignen sich in vorteilhafter Weise zur Verbesserung der Thermostabilität und/oder zur Verringerung von Ablagerungen im Kraftstoffkreislauf und Verbrennungssystem von Turbinen, wie sie z. B. als Flugzeugantrieb eingesetzt werden. Ein weiterer Gegenstand der Erfindung ist daher eine Turbinenkraftstoffzusammensetzung, die einen Turbinenkraftstoff (jet fuel) und eine Zusammensetzung, wie zuvor beschrieben, enthält.

Die Turbinenkraftstoffzusammensetzung enthält eine Hauptmenge eines flüssigen Turbinenkraftstoffs, wobei es sich beispielsweise um einen in der zivilen oder militärischen Luftfahrt üblichen Turbinenkraftstoff handeln kann. Dazu zählen beispielsweise Kraftstoffe der Bezeichnung Jet Fuel A, Jet Fuel A-1, Jet Fuel B, JP-4, JP-5, JP-7, JP-8 und JP-8+100. Jet A und Jet A-1 sind kommerziell erhältliche Turbinenkraftstoffspezifikationen auf Kerosinbasis. Die zugehörigen Normen sind ASTM D 1655 sowie DEF STAN 91-91. Jet B ist ein weiter geschnittener Kraftstoff auf Basis von Naphtha- und Kerosinfraktionen. JP-4 ist äquivalent zu Jet B. JP-5, JP-7, JP-8 und JP-8+100 sind militärische Turbinenkraftstoffe, wie sie beispielsweise von der Marine und Luftwaffe eingesetzt werden. Zum Teil bezeichnen diese Normen Formulierungen, die bereits weitere Additive, wie Korrosionsinhibitoren, Vereisungsinhibitoren, statische Dissipatoren, etc. enthalten.

Die erfindungsgemäßen 2-Alkyl-polyisobutenylphenole und/oder deren Mannich-Addukte können den Turbinenkraftstoffzusammensetzungen einzeln, als Gemisch und gegebenenfalls in Kombination mit weiteren an sich bekannten Zusatzstoffen zugegeben werden.

Geeignete Zusatzstoffe, die in den erfindungsgemäßen Turbinenkraftstoffzusammensetzungen enthalten sein können, umfassen Detergenzien, Korrosionsinhibitoren, Antioxidantien, wie sterisch gehinderte tert.-Butylphenole oder N-Butylphenylendiamine, Metalldesaktivatoren, wie N,N'-Disalicyliden-1,2-diaminopropan, Lösungsvermittler, Antistatika, wie Stadis 450, Biocide, Anti-Icing-Mittel, wie Diethylenglykolmethylether, und Mischungen davon.

Bevorzugte Zusatzstoffe a) sind von Bernsteinsäureanhydrid abgeleitete Verbindungen mit langkettigen Kohlenwasserstoffresten. Diese können weitere funktionelle Gruppen aufweisen, die vorzugsweise ausgewählt sind unter Hydroxy-, Amino-, Amido- und/oder Imidogruppen. Bevorzugte Additive sind die entsprechenden Derivate von Polyalkenylbernsteinsäureanhydrid, welche z. B. durch Umsetzung von Polyalkenen mit Maleinsäureanhydrid auf thermischem Weg oder über die chlorierten Kohlenwasserstoffe erhältlich sind. Das zahlenmittlere Molekulargewicht der langkettigen Kohlenwasserstoffreste liegt vorzugsweise in einem Bereich von etwa 200 bis 10000, besonders bevorzugt 400 bis 5000, insbesondere 600 bis 3000 und speziell 650 bis 2000.

Vorzugsweise leiten sich diese langkettigen Kohlenwasserstoffreste von konventionellen und insbesondere von den zuvor genannten reaktiven Polyisobutenen ab. Von besonderem Interesse als Zusatzstoffe a) sind die Derivate von Polyalkenylbernsteinsäureanhydriden mit Ammoniak, Monoaminen, Polyaminen, Monoalkoholen und Polyolen. Zur Derivatisierung bevorzugte Polyamine umfassen Ethylendiamin, Diethylentriamin, Triethylentetraamin, Tetraethylenpentamin, Propylendiamin, etc. Geeignete Alkohole umfassen einwertige Alkohole, wie Ethanol, Allylalkohol, Dodecanol und Benzylalkohol, mehrwertige Alkohole, wie Ethylenglykol, Dieethylenglykol, Propylenglykol, 1,2-Butandiol, Neopentylglykol, Glycerin, Trimethylolpropan, Erythrit, Pentaerythrit, Mannitol und Sorbitol.

Als Zusatzstoffe geeignete Bernsteinsäureanhydridderivate a) sind beispielsweise in der US 3,522,179, US 4,234,435, US 4,849,572, US 4,904,401, US 5,569,644 und US 6,165,235 beschrieben, worauf hier in vollem Umfang Bezug genommen wird.

Geeignete Zusatzstoffe b) sind Polyalkenylthiophosphonatester. Der Polyalkenylrest diese Ester weist vorzugsweise ein zahlenmittleres Molekulargewicht im Bereich von etwa 300 bis 5000, besonders bevorzugt 400 bis 2000 und insbesondere 500 bis 1500 auf. Der Polyalkenylrest leitet sich vorzugsweise von Polyolefinen ab, wie sie zuvor bei der Komponente a) als langkettiger Kohlenwasserstoffrest beschrieben wurden. Dabei handelt es sich speziell um Polyalkenylreste, die sich von konventionellen oder reaktiven Polyisobutenen ableiten. Geeignete Verfahren zur Herstellung geeigneter Polyalkenylthiophosphonatester durch Umsetzung eines Polyolefins mit einem Thiophosphorylierungsmittel sind z. B. in der US 5,725,611 beschrieben, worauf hier Bezug genommen wird.

Geeignete Zusatzstoffe c) sind Mannich-Addukte, die von den erfindungsgemäßen Mannich-Addukten verschieden sind. Derartige Addukte werden prinzipiell durch Mannich-Umsetzung von aromatischen Hydroxylverbindungen, insbesondere Phenol und Phenolderivaten, mit Aldehyden und Mono- oder Polyaminen erhalten. Vorzugsweise handelt es sich um die Umsetzungsprodukte von Polyisobuten-substituierten Phenolen mit Formaldehyd und Mono- oder Polyaminen, wie Ethylendiamin, Diethylentriamin, Triethylentetramin, Tetraethylenpentamin, Dimethylaminopropylamin, etc. Geeignete Mannich-Addukte und Verfahren zu ihrer Herstellung sind z. B. in der US 5,876,468, EP-A-831 141, EP-A-1 233 990 und EP-A-1 226 188 beschrieben, worauf hier in vollem Umfang Bezug genommen wird.

Die erfindungsgemäße Turbinenkraftstoffzusammensetzung enthält wenigstens ein 2-Alkyl-polyisobutenylphenol und/oder ein Mannich-Addukt davon, wie zuvor beschrieben, in einer Menge von 0,0001 bis 1 Gew.-%, besonders bevorzugt von 0,001 bis 0,5 Gew.-%, insbesondere 0,01 bis 0,2 Gew.-% und speziell 0,01 bis 0,1 Gew.-%, bezogen auf die Gesamtmenge der Turbinenkraftstoffzusammensetzung.

Die zusätzlichen Komponente a) bis c) sowie weitere der zuvor genannten zusätzlichen Komponenten können üblicherweise jeweils in Mengen von 0,0001 bis 1 Gew.-%, bevorzugt 0,001 bis 0,6 Gew.-% und insbesondere 0,0015 bis 0,4 Gew.-%, bezogen auf die Gesamtmenge der Turbinenkraftstoffzusammensetzung, eingesetzt werden.

Ein weiterer Gegenstand der Anmeldung ist ein Additivkonzentrat für Turbinenkraftstoffe, enthaltend wenigstens ein 2-Alkyl-polyisobutenylphenol und/oder Mannich-Addukt davon, wie zuvor beschrieben, gegebenenfalls wenigstens ein Verdünnungsmittel sowie gegebenenfalls mindestens einen weiteren Zusatzstoff, der ausgewählt ist unter den zuvor beschriebenen.

Geeignete Verdünnungsmittel sind beispielsweise bei der Erdölverarbeitung anfallende Fraktionen, wie Kerosin, Naphtha oder Brightstock. Geeignet sind darüber hinaus aromatische und aliphatische Kohlenwasserstoffe wie Solvent Naphtha schwer, Solvesso® oder Shellsol® sowie Gemische dieser Lösungs- und Verdünnungsmittel.

Das erfindungsgemäße Polymer liegt in den Konzentraten vorzugsweise in einer Menge von 0,1 bis 100 Gew.-%, besonders bevorzugt von 1 bis 80 Gew.-% und insbesondere von 10 bis 70 Gew.-%, bezogen auf das Gesamtgewicht des Konzentrats, vor.

Die erfindungsgemäßen 2-Alkyl-polyisobutenylphenole und deren Mannich-Addukte eignen sich in vorteilhafter Weise zur Verbesserung der Thermostabilität von Turbinenkraftstoffen. Sie eignen sich weiterhin auch zur Verringerung von Ablagerungen im Kraftstoffkreislauf und im Verbrennungssystem von Turbinen, insbesondere Flugzeugturbinen. Ein weiterer Gegenstand der Erfindung ist daher auch die Verwendung wenigstens eines erfindungsgemäßen 2-Alkyl-polyisobutenylphenols und/oder eines Mannich-Addukts davon für diese Einsatzbereiche.

Die Erfindung wird anhand der folgenden, nicht einschränkenden Beispiele näher erläutert.

### Beispiele

### Vergleichsbeispiel 1)

### Alkylierung mit BF₃-Phenol-Komplex als Katalysator

In einem 2 I-Vierhalskolben, der mit Rührer, Thermometer und Tropftrichter versehen ist, werden 65 g o-Kresol in 20 ml Toluol gelöst. Dann werden 11,8 g BF₃-Phenol-komplex (1:2, mol:mol) zugegeben und 300 g Polyisobuten (Mₙ = 1000 Dalton, M_{w}/Mₙ= 1,6; Glissopal® 1000) in 300 ml n-Hexan bei 20 bis 30 °C zugetropft und 16 h nachgerührt. Das Reaktionsgemisch wird einmal mit 25 % Ammoniaklösung und fünfmal mit 500 ml Wasser gewaschen, über Na₂SO₄ getrocknet und am Rotationsverdampfer bei 160 °C/5 mbar eingeengt.
325 g Öl, nach ¹H-NMR ^{a)}
2-Methyl-4-polyisobutenylphenol (δ: 6,66 ppm Dublett, 7,04 ppm Dublett von Dubletts, 7,09 ppm Dublett, je 1H; 2,24 ppm Singulett 3H) und 10 Mol-% 4-Polyisobutenylphenol (6,73 ppm Dublett, 7,22 ppm Dublett je 2H)

### Vergleichsbeispiel 2)

### Alkylierung mit BF₃-Diethylether-Komplex als Katalysator

In einem 1 I-Vierhalskolben, der mit Rührer, Thermometer und Tropftrichter versehen ist, werden 60 g 2-tert.-Butylphenol in 14 ml BF₃-Etherat gelöst. Dann werden 200 g Polyisobuten (Mₙ = 1000 Dalton, M_{w}/Mₙ = 1,6; Glissopal® 1000) in 200 ml n-Hexan bei 19 bis 23 °C zugetropft und 16 h nachgerührt. Das Reaktionsgemisch wird dreimal mit 500 ml Methanol gewaschen und am Rotationsverdampfer bei 140 °C/5 mbar eingeengt.
180 g Öl, nach ¹H-NMR ^{a)} (in Mol%):
17 % 2-tert.-Butyl-4-polyisobutenylphenol (δ: 6,57 ppm Dublett, 7,15 ppm Dublett von Dubletts, 7,26 ppm Dublett, je 1H; 1,40 ppm 9H) und
7 % 4-Polyisobutenylphenol (δ: 6,73 ppm Dublett, 7,22 ppm Dublett je 2H)
76 % Polyisobuten mit umgelagerter Doppelbindung

### Vergleichsbeispiel 3)

### Alkylierung mit CF₃-SO₃H als Katalysator

In einem 1 I-Vierhalskolben, der mit Rührer, Thermometer und Tropftrichter versehen ist, werden 41,2 g 2-tert.-Butylphenol in 10 ml Toluol gelöst. Dann werden 5 g CF₃-SO₃H zugegeben und 200 g Polyisobuten (Mₙ = 1000 Dalton, M_{w}/Mₙ = 1,6; Glissopal® 1000) in 100 ml n-Hexan bei 19 bis 25 °C zugetropft und 16 h nachgerührt. Das Reaktionsgemisch wird einmal mit 5 % Ammoniaklösung und dreimal mit 500 ml Methanol gewaschen und am Rotationsverdampfer bei 120 °C/5mbar eingeengt.
200 g Öl, nach ¹H-NMR ^{a)} (in Mol-%):

| | |
|---|---|
| 20% | Aromatengemisch, keine einzelnen Isomere erkennbar |
| 80% | Polyisobuten mit umgelagerter Doppelbindung |

### Beispiel 4 (erfindungsgemäß)

In einem 4 I-Vierhalskolben, der mit Rührer, Thermometer und Tropftrichter versehen ist, werden 300 g 2-tert.-Butylphenol in 200 ml Toluol gelöst. Dann werden bei 0 bis 5 °C 3,5 g BF₃ eingegast und anschließend 1000 g Polyisobuten (Mₙ = 1000 Dalton, M_{w}/Mₙ= 1,6; Glissopal® 1000) in 400 ml n-Hexan bei 0 bis 10 °C zugetropft und 2 h nachgerührt. Die Reaktion wird mit 200 ml Methanol abgebrochen und zweimal mit 1,5 l Methanol gewaschen und am Rotationsverdampfer bei 160 °C/5 mbar eingeengt.
970 g Öl, nach ¹H-NMR ^{a)} (in Gew.-%):

| | |
|---|---|
| > 95 % | 2-tert.-Butyl-4-polyisobutenylphenol (δ: 6,57 ppm Dublett, 7,15 ppm Dublett von Dubletts, 7,26 ppm Dublett, je 1H; 1,40 ppm 9H) und daneben geringe Mengen an 2-t.Butylphenol |

### Beispiel 5 (nicht erfindungsgemäß)

In einem 4 I-Vierhalskolben, der mit Rührer, Thermometer und Tropftrichter versehen ist, werden 300 g 2-tert.Butylphenol in 200 ml Toluol gelöst. Dann werden bis 0 bis 5 °C 10 g BF₃/MeOH Komplex 1:1,1 zugetropft und anschließend 1000 g Polyisobuten (Mₙ = 1000 Dalton, M_{w}/Mₙ = 1,6; Glissopal® 1000) in 400 ml n-Hexan bei 0 bis 10 °C zugetropft und 2 h nachgerührt. Die Reaktion wird mit 200 ml Methanol abgebrochen und zweimal mit 1 l Methanol gewaschen und am Rotationsverdampfer bis 160 °C/5 mbar eingeengt.
958 g Öl, nach ¹H-NMR ^{a} (in Gew.-%):

| | |
|---|---|
| ca. 95 % | 2-tert.-Butyl-4-polyisobutenylphenol (δ: 6,57 ppm Dublett, 7,15 ppm Dublett von Dubletts, 7,26 ppm Dublett, je 1H; 1,40 ppm 9H) und daneben geringe Mengen an 2-tert.Butylphenol. |

### Beispiel 6 (erfindungsgemäß)

In einem 4 I-Vierhalskolben, der mit Rührer, Thermometer und Tropftrichter versehen ist, werden 324 g 2-Methylphenol in 100 ml Toluol vorgelegt. Dann werden bei Raumtemperatur 8,5 g BF₃ eingegast und anschließend 1500 g Polyisobuten (Mₙ = 1000 Dalton, M_{w}/Mₙ= 1,6; Glissopal® 1000) in 200 ml n-Hexan zugefahren, wobei die Innentemperatur bis 30 °C steigt. Es wird über Nacht bei Raumtemperatur nachgerührt. Die Reaktion wird mit 500 ml Methanol abgebrochen und mit 1 l Methanol gewaschen und am Rotationsverdampfer bei 150 °C/5 mbar eingeengt.
1530 g Öl, nach ¹H-NMR ^{a)} (in Gew.-%):

| | |
|---|---|
| > 95 % | 2-Methyl-4-polyisobutenylphenol (δ: 6,66 ppm Dublett, 7,04 ppm Dublett von Dubletts, 7,09 ppm Dublett, je 1H, 2,24 ppm Singulett 3H) und daneben geringe Mengen an 2-Methylphenol |

### Beispiel 7 (erfindungsgemäß)

In einem 4 I-Vierhalskolben, der mit Rührer, Thermometer und Tropftrichter versehen ist, werden 272 g 2-iso-Propylphenol in 100 ml Toluol vorgelegt. Dann werden bei 0 bis 5 °C 10 g BF₃ eingegast und anschließend 1000 g Polyisobuten (Mₙ = 1000 Dalton, M_{w}/Mₙ= 1,6; Glissopal® 1000) in 400 ml n-Hexan zugefahren, wobei die Innentemperatur bis 10 °C steigt. Es wird über Nacht bei Raumtemperatur nachgerührt. Die Reaktion wird mit 500 ml Methanol abgebrochen und zweimal mit 1 l Methanol gewaschen und am Rotationsverdampfer bei 150 °C/5 mbar eingeengt.
950 g Öl, nach ¹H-NMR ^{a)} (in Gew.-%):

| | |
|---|---|
| > 95 % | 2-Isopropyl-4-polyisobutenylphenol (δ: 6,64 ppm Dublett, 7,01 ppm Dublett von Dubletts, 7,18 ppm Dublett, 3,19 ppm Heptett je 1H, 1,24 ppm Dublett, 6H) und daneben geringe Mengen an 2- iso-Propylphenol |

### Beispiel 8 (Aminoalkylierung nach Mannich)

In einem 0,5 I-Vierhalskolben, der mit Rührer, Thermometer und Tropftrichter und Wasserabscheider versehen ist, werden 100 g 2-tert.-Butyl-4-polyisobutenylphenol (aus Beispiel 4) in 100 ml Xylol gelöst. Dann werden 12 g 30 %ig Formaldehydlösung zugesetzt und 13,5 g Dimethylaminlösung 40 %ig zugetropft. Es wird unter kräftigem Rückfluss Wasser ausgekreist, bis das Xylol klar übergeht. Die Lösung wird bei 140 °C, 5 mbar am Rotationsverdampfer eingeengt.
105 g Öl, nach ¹H-NMR ^{b)}
2-tert.-Butyl-4-polyisobutenyl-6-(N,N-dimethylamino)methylphenol (δ: 7,15 ppm Dublett, 6,79 ppm Dublett, je 1H, 3,58 ppm Singulett 2H)

Analog zu Beispiel 8 werden dargestellt:

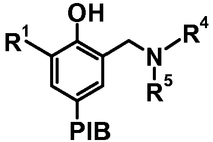

| Bsp. Nr. | Mₙ(PIB) | R¹ | R⁴ = R⁵ | δₐᵣₒₘₐₜ₁ | δₐᵣₒₘₐₜ₂ | δ_{benzyl} |
|---|---|---|---|---|---|---|
| | Dalton | | | ppm | ppm | ppm |
| 9 | 1000 | CH₃ | -CH₂-CH(C₂H₅)-C₄H₉ | 6,99 | 6,79 | 3,58 |
| 10 | 1000 | CH₃ | -C₂H₄-OH | 7,09 | 7,03 | 3,82 |
| 11 | 1000 | i-C₃H₇ | -CH₂-CH(C₂H₅)-C₄H₉ | 7,06 | 6,78 | 3,58 |
| 12 | 1000 | i-C₃H₇ | CH₃ | 7,07 | 6,77 | 3,58 |
| 13 | 1000 | i-C₃H₇ | -C₂H₄-OH | 7,10 | 6,81 | 4,63 |
| 14 | 1000 | tert.-C₄H₉ | CH₃ | 7,15 | 6,78 | 3,58 |
| 15 | 1000 | tert.-C₄H₉ | -C₂H₄-OH | 7,19 | 6,83 | 3,83 |
| 16 | 1000 | tert.-C₄H₉ | C₅H₆ | 7,12 | 6,3 | 4,60 |
| 17 | 1800 | tert.-C₄H₉ | CH₃ | 7,15 | 6,78 | 3,58 |
| 18 | 800 | tert.-C₄H₉ | CH₃ | 7,15 | 6,78 | 3,58 |
| 19 | 300 | tert.-C₄H₉ | CH₃ | 7,16 | 6,79 | 3,58 |

### Beispiel 20

In einem 0,5 I-Vierhalskolben, der mit Rührer, Thermometer und Rückflusskühler versehen ist, werden 100 g 2-Methyl-4-polyisobutenylphenol (aus Beispiel 6) in 100 ml Xylol gelöst. Dann werden 15 g Triphenylhexahydrotriazin zugesetzt und 1 h unter kräftigem Rückfluss gekocht. Die Lösung wird klar. Die Lösung wird bei 160 °C, 3 mbar am Rotationsverdampfer eingeengt.
108 g Öl, nach ¹H-NMR ^{b)}
2-Methyl-4-polyisobutenyl-6-(N-phenylamino)methylphenol (δ: 6,97 ppm Dublett, 6,84 ppm Dublett, je 1H, 4,58 ppm Singulett 2H)
Alle NMR: 16 scans, 400 MHz, CD₂Cl₂
^{a) :} Angegeben sind die Shifts der Aromatenprotonen und der 2-Alkylgruppe
^{b) :} Angegeben sind die Shifts der Aromatenprotonen und der Benzylgruppe

### Beispiel 21 (Verbesserung der thermischen Stabilität von Turbinenkraftstoffen (jet fuels))

Es wurde ein Turbinenkraftstoff der Spezifikation Jet A-1 nach DEF STAN 91-91 bzw. ASTM D 1655 eingesetzt. Die Überprüfung der Thermostabilität erfolgte nach der JFTOT-Breakpoint-Methode nach ASTM D 3241. Bei dem nicht additivierten Turbinenkraftstoff wurde ein Wert von 250 °C ermittelt. An einem Kraftstoff, der mit 100 mg/l eines erfindungsgemäßen Mannich-Addukts gemäß Beispiel 8 additiviert war, wurde ein Wert von 270 °C gemessen.

### Beispiel 22 (Überprüfung der thermischen Stabilität)

Es wurde der gleiche Kraftstoff wie in Beispiel 20 eingesetzt. Die Additivierung erfolgte wiederum mit 100 mg/l einer Zusammensetzung gemäß Beispiel 8. In einem 3-Halsglaskolben, der mit Rührer, Rückflusskühler und Thermometer versehen war, wurden zunächst bei Raumtemperatur 5 l Luft innerhalb 1 h durch 150 ml des zu untersuchenden Kraftstoffs geleitet. Anschließend wurde der Kraftstoff mit einem Ölbad auf 140 °C erhitzt und weitere 5 h bei dieser Temperatur gerührt. Nach Abkühlen auf Raumtemperatur wurde die gesamte Kraftstoffmenge über einen 0,45 µm Membranfilter filtriert. Anschließend wurde der Filterrückstand nach 45 min. Trocknen im Trockenschrank bei 115 °C und anschließender 2-stündiger Trocknung unter Vakuum im Exikator gravimetrisch bestimmt.
Blindwert (ohne Additiv): 4,4 mg
erfindungsgemäß (additiviert mit 100 mg/l Bsp. 8): 2,6 mg

Durch den Einsatz des erfindungsgemäßen Additivs konnte die durch thermische Belastung des Turbinenkraftstoffs entstehende Partikelmenge deutlich reduziert werden.

## Patentansprüche

1. Verfahren zur Herstellung von 2-Alkyl-polyisobutenylphenolen und deren Mannich-Addukten, bei dem man
a) wenigstens eine aromatische 2-Alkylhydroxyverbindung, die ausgewählt ist unter Verbindungen der allgemeinen Formel I 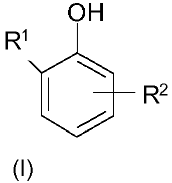 worin
R¹ für C₁-C₂₀-Alkyl steht und
R² für Wasserstoff, C₁-C₂₀-Alkyl, Hydroxy oder C₂-C₄₀₀₀-Alkyl, das durch wenigstens eine Gruppierung, die ausgewählt ist unter O, S und NR³, unterbrochen ist, steht, wobei R³ für Wasserstoff, Alkyl, Cycloalkyl oder Aryl steht,
mit einer katalytisch wirksamen Menge einer BF₃-Quelle, die zur Komplexbildung mit der 2-Alkylhydroxyverbindung befähigt ist, in Kontakt bringt und mit im Wesentlichen einfach ethylenisch ungesättigten und im wesentlichen homopolymeren Polyisobutenen mit einem zahlenmittleren Molekulargewicht Mₙ im Bereich von 200 bis 500000 und enthaltend wenigstens 50 Mol-%, bezogen auf die Gesamtanzahl an Polyisobuten-Makromolekülen, terminal angeordneter Doppelbindungen, die entweder Vinyldoppelbindungen oder Vinyliden-Doppelbindungen sind, alkyliert,
wobei die in Schritt a) eingesetzte BF₃-Quelle ausgewählt ist unter BF₃-Komplexen mit wenigstens einer der in Schritt a) eingesetzten aromatischen 2-Alkylhydroxyverbindungen.

2. Verfahren nach Anspruch 1 zur Herstellung von Mannich-Addukten von 2-Alkyl-polyisobutenylphenolen, bei dem man zusätzlich
b) die in Schritt a) erhaltenen 2-Alkyl-polyisobutenylphenole einer Aminoalkylierung unterzieht.

3. Verfahren nach Anspruch 1 oder 2, wobei das zur Alkylierung in Schritt a) eingesetzte Polyisobuten ein zahlenmittleres Molekulargewicht Mₙ im Bereich von 200 bis 1000 aufweist.

4. Verfahren nach einem der vorhergehenden Ansprüche, wobei das Inkontaktbringen der aromatischen 2-Alkylhydroxyverbindung mit der BF₃-Quelle und die Alkylierung mit den Polyisobutenen bei einer Temperatur von höchstens 40 °C, bevorzugt von höchstens 30 °C erfolgt.

5. Verfahren nach einem der vorhergehenden Ansprüche, wobei das in Kontakt bringen der aromatischen 2-Alkylhydroxyverbindung mit der BF₃-Quelle bei einer Temperatur von höchstens 20 °C, bevorzugt von höchstens 10 °C erfolgt.

6. Verfahren nach Anspruch 1 oder 2, wobei R¹ und/oder R² für einen C₃-C₂₀-Alkylrest stehen, der wenigstens ein tertiäres oder quartäres Kohlenstoffatom aufweist.

7. Verfahren nach Anspruch 1 oder 2, wobei R¹ für einen C₁-C₂₀-Alkylrest und R² für Wasserstoff steht und die in Schritt a) erhaltenen 2-Alkyl-polyisobutenylphenole einer Aminoalkylierung in Schritt b) unterzogen werden.

8. Verfahren nach Anspruch 1 oder 2, wobei R² für einen von Wasserstoff verschiedenen Rest steht, der in 6-Position an den Benzolring gebunden ist.

9. Verfahren nach Anspruch 1 oder 2, worin R¹ für Isopropyl oder tert-Butyl steht und R² für Wasserstoff steht und die in Schritt a) erhaltenen 2-Alkyl-polyisobutenylphenole einer Aminoalkylierung in Schritt b) unterzogen werden.

10. Zusammensetzung, enthaltend wenigstens ein 2-Alkyl-polyisobutenylphenol und/oder wenigstens ein Mannich-Addukt davon, erhalten durch ein Verfahren nach einem der Ansprüche 1 bis 9.

11. Zusammensetzung nach Anspruch 10, die durch Alkylierung wenigstens einer aromatischen 2-Alkylhydroxyverbindung der allgemeinen Formel I erhältlich ist, worin R¹ und/oder R² für einen C₁-C₂₀-Alkylrest stehen, der wenigstens ein tertiäres oder quartäres Kohlenstoffatom aufweist.

12. Zusammensetzung nach Anspruch 11, die mindestens 90 Gew.-% wenigstens eines 2-Alkyl-polyisobutenylphenol und/oder wenigstens eines Mannich-Addukts davon aufweist.

13. Zusammensetzung nach einem der Ansprüche 10 bis 12 in Form einer Kraftstoffzusammensetzung, enthaltend eine Hauptmenge eines flüssigen Kohlenwasserstoffkraftstoffs.

14. Zusammensetzung nach einem der Ansprüche 10 bis 12 in Form einer Schmierstoffzusammensetzung, enthaltend eine Hauptmenge eines flüssigen, halbfesten oder festen Schmierstoffs.

15. Turbinenkraftstoffzusammensetzung, enthaltend einen Turbinenkraftstoff (jet fuel) und eine Zusammensetzung, wie in einem der Ansprüche 10 bis 12 definiert.

16. Additivkonzentrat für Turbinenkraftstoffe, enthaltend
- wenigstens eine Zusammensetzung, wie in einem der Ansprüche 10 bis 12 definiert,
- gegebenenfalls wenigstens ein Verdünnungsmittel,
- gegebenenfalls wenigstens einen Zusatzstoff.

17. Verwendung einer 2-Alkyl-polyisobutenylphenol-haltigen Zusammensetzung, wie in einem der Ansprüche 10 bis 12 definiert, als Kraftstoffadditive und zur Herstellung von Kraftstoffdetergenzien.

18. Verwendung einer ein Mannich-Addukt eines 2-Alkyl-polyisobutenylphenols enthaltenden Zusammensetzung, wie in einem der Ansprüche 10 bis 12 definiert, als Detergensadditiv in Kraft- und Schmierstoffzusammensetzungen.

19. Verwendung wenigstens eines 2-Alkyl-polyisobutenylphenols und/oder wenigstens eines Mannich-Addukts davon, erhalten durch ein Verfahren nach einem der Ansprüche 1 bis 9, zur Verbesserung der thermischen Stabilität von Turbinenkraftstoffen.

20. Verwendung wenigstens eines 2-Alkyl-polyisobutenylphenols und/oder wenigstens eines Mannich-Addukts davon, erhalten durch ein Verfahren nach einem der Ansprüche 1 bis 9, als Additiv für Turbinenkraftstoffe zur Verringerung von Ablagerungen im Kraftstoffsystem und/oder Verbrennungssystem einer Turbine.

## Claims

1. A process for preparing 2-alkylpolyisobutenylphenols and their Mannich adducts, by
a) contacting at least one 2-alkylhydroxyaromatic compound selected from compounds of the general formula I 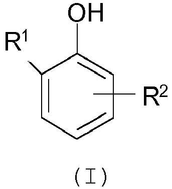 where
R¹ is C₁-C₂₀-alkyl and R² is hydrogen, C₁-C₂₀-alkyl, hydroxyl or C₂-C₄₀₀₀-alkyl which is interrupted by at least one moiety which is selected from O, S and NR³ where R³ is hydrogen, alkyl, cycloalkyl or aryl with a catalytically active amount of a BF₃ source which is capable of complex formation with the 2-alkylhydroxy compound, and alkylating with substantially monoethylenically unsaturated and substantially homopolymeric polyisobutenes having a number-average molecular weight Mₙ in the range from 200 to 500 000 and comprising at least 50 mol%, based on the total number of polyisobutene macromolecules, of terminal double bonds that are either vinyl double bonds or vinylidene double bonds, wherein the BF₃ source used in step a) is selected from BF₃ complexes with at least one of the 2-alkylhydroxyaromatic compounds used in step a).

2. The process according to claim 1 for preparing Mannich adducts of 2-alkylpolyisobutenylphenols, by additionally
b) subjecting the 2-alkylpolyisobutenylphenols obtained in step a) to an aminoalkylation.

3. The process according to claim 1 or 2, wherein the polyisobutene used for alkylation in step a) has a number-average molecular weight Mₙ in the range from 200 to 1000.

4. The process according to any of the preceding claims, wherein the 2-alkylhydroxyaromatic compound is contacted with the BF₃ source and alkylated with the polyisobutenes at a temperature of at most 40°C, preferably of at most 30°C.

5. The process according to any of the preceding claims, wherein the 2-alkylhydroxyaromatic compound is contacted with the BF₃ source at a temperature of at most 20°C, preferably of at most 10°C.

6. The process according to claim 1 or 2, wherein R¹ and/or R² are each a C₃-C₂₀-alkyl radical which has at least one tertiary or quaternary carbon atom.

7. The process according to claim 1 or 2, wherein R¹ is a C₁-C₂₀-alkyl radical and R² is hydrogen, and the 2-alkylpolyisobutenylphenols obtained in step a) are subjected to an aminoalkylation in step b).

8. The process according to claim 1 or 2, wherein R² is a radical other than hydrogen which is bonded to the benzene ring in the 6-position.

9. The process according to claim 1 or 2, in which R¹ is isopropyl or tert-butyl and R² is hydrogen, and the 2-alkylpolyisobutenylphenols obtained in step a) are subjected to an aminoalkylation in step b).

10. A composition comprising at least one 2-alkylpolyisobutenylphenol and/or at least one Mannich adduct thereof, obtained by a process according to any of claims 1 to 9.

11. The composition according to claim 10, which is obtainable by alkylating at least one 2-alkylhydroxyaromatic compound of the general formula I where R¹ and/or R² are each a C₁-C₂₀-alkyl radical which has at least one tertiary or quaternary carbon atom.

12. The composition according to claim 11, which has at least 90% by weight of at least one 2-alkylpolyisobutenylphenol and/or at least one Mannich adduct thereof.

13. The composition according to any of claims 10 to 12 in the form of a fuel composition comprising a majority of a liquid hydrocarbon fuel.

14. The composition according to any of claims 10 to 12 in the form of a lubricant composition comprising a majority of a liquid, semisolid or solid lubricant.

15. A turbine fuel composition comprising a turbine fuel (jet fuel) and a composition as defined in any of claims 10 to 12.

16. An additive concentrate for turbine fuels, comprising
- at least one composition as defined in any of claims 10 to 12,
- if appropriate at least one diluent,
- if appropriate at least one additive.

17. The use of a 2-alkylpolyisobutenylphenol-containing composition as defined in any of claims 10 to 12 as a fuel additive and for preparing fuel detergents.

18. The use of a composition comprising a Mannich adduct of a 2-alkylpolyisobutenylphenol and as defined in any of claims 10 to 12 as a detergent additive in fuel and lubricant compositions.

19. The use of at least one 2-alkylpolyisobutenylphenol and/or of at least one Mannich adduct thereof, obtained by a process according to any of claims 1 to 9, for improving the thermal stability of turbine fuels.

20. The use of at least one 2-alkylpolyisobutenylphenol and/or of at least one Mannich adduct thereof, obtained by a process according to any of claims 1 to 9, as an additive for turbine fuels for reducing deposits in the fuel system and/or combustion system of a turbine.

## Revendications

1. Procédé pour la préparation de 2-alkylpolyisobuténylphénols et leurs produits d'addition de Mannich, dans lequel
a) au moins un composé 2-alkylhydroxy aromatique choisi parmi les composés de formule générale I 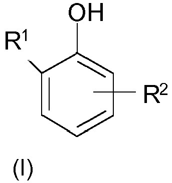 dans laquelle
R¹ représente C₁-C₂₀-alkyle et
R² représente hydrogène, C₁-C₂₀-alkyle, hydroxy ou C₂-C₄₀₀₀-alkyle, qui est interrompu par au moins un groupement qui est choisi parmi O, S et NR³, R³ représentant hydrogène, alkyle, cycloalkyle ou aryle,
est amené en contact avec une quantité catalytiquement active d'une source de BF₃, qui est apte à la formation d'un complexe avec le composé 2-alkylhydroxy, et alkylé avec des polyisobutènes essentiellement éthyléniquement monoinsaturés et essentiellement homopolymères, présentant un poids moléculaire moyen en nombre Mₙ dans la plage de 200 à 500.000 et contenant au moins 50% en mole, par rapport au nombre de total de macromolécules de polyisobutène, de doubles liaisons disposées en position terminale, qui ne sont ni des doubles liaisons vinyle ni des doubles liaisons vinylidène, la source de BF₃ utilisée dans l'étape a) étant choisie parmi les complexes de BF₃ avec au moins un des composés 2-alkylhydroxy aromatiques utilisés dans l'étape a).

2. Procédé selon la revendication 1 pour la préparation de produits d'addition de Mannich de 2-alkylpolyisobuténylphénols, dans lequel en outre
b) les 2-alkylpolyisobuténylphénols obtenus dans l'étape a) sont soumis à une aminoalkylation.

3. Procédé selon la revendication 1 ou 2, le polyisobutène utilisé pour l'alkylation dans l'étape a) présentant un poids moléculaire moyen en nombre Mₙ dans la plage de 200 à 1000.

4. Procédé selon l'une quelconque des revendications précédentes, la mise en contact du composé 2-alkylhydroxy aromatique avec la source de BF₃ et l'alkylation avec les polyisobutènes ayant lieu à une température d'au plus 40°C, de préférence d'au plus 30°C.

5. Procédé selon l'une quelconque des revendications précédentes, la mise en contact du composé 2-alkylhydroxy aromatique avec la source de BF₃ ayant lieu à une température d'au plus 20°C, de préférence d'au plus 10°C.

6. Procédé selon la revendication 1 ou 2, R¹ et/ou R² représentant un radical C₃-C₂₀-alkyle, qui présente au moins un atome de carbone tertiaire ou quaternaire.

7. Procédé selon la revendication 1 ou 2, R¹ représentant un radical C₁-C₂₀-alkyle et R² représentant hydrogène et les 2-alkylpolyisobuténylphénols obtenus dans l'étape a) étant soumis à une aminoalkylation dans l'étape b).

8. Procédé selon la revendication 1 ou 2, R² représentant un radical différent d'hydrogène qui est lié en 6ème position au cycle benzène.

9. Procédé selon la revendication 1 ou 2, R¹ représentant isopropyle ou tert-butyle et R² représentant hydrogène et les 2-alkylpolyisobuténylphénols obtenus dans l'étape a) étant soumis à une aminoalkylation dans l'étape b).

10. Composition, contenant au moins un 2-alkylpolyisobuténylphénol et/ou au moins un produit d'addition de Mannich de celui-ci, obtenu(s) par un procédé selon l'une quelconque des revendications 1 à 9.

11. Composition selon la revendication 10, qui peut être obtenue par alkylation d'au moins un composé 2-alkylhydroxy aromatique de formule générale I, dans laquelle R¹ et/ou R² représentent un radical C₁-C₂₀-alkyle, qui présente au moins un atome de carbone tertiaire ou quaternaire.

12. Composition selon la revendication 11, qui présente au moins 90% en poids d'au moins un 2-alkylpolyisobuténylphénol et/ou d'au moins un produit d'addition de Mannich de celui-ci.

13. Composition selon l'une quelconque des revendications 10 à 12 sous forme d'une composition de carburant, contenant une quantité principale d'un carburant hydrocarboné liquide.

14. Composition selon l'une quelconque des revendications 10 à 12 sous forme d'une composition de lubrifiant, comprenant une quantité principale d'un lubrifiant liquide, semi-solide ou solide.

15. Composition de kérosène, contenant un kérosène (jet fuel) et une composition telle que définie dans l'une quelconque des revendications 10 à 12.

16. Concentrat d'additif pour kérosène, contenant
- au moins une composition telle que définie dans l'une quelconque des revendications 10 à 12,
- le cas échéant au moins un diluant,
- le cas échéant au moins un adjuvant.

17. Utilisation d'une composition contenant du 2-alkylpolyisobuténylphénol, telle que définie dans l'une quelconque des revendications 10 à 12, comme additifs pour carburant et pour la préparation de détergents pour carburant.

18. Utilisation d'une composition contenant un produit d'addition de Mannich d'un 2-alkylpolyisobuténylphénol, telle que définie dans l'une quelconque des revendications 10 à 12, comme additif détergent dans des compositions de carburant et de lubrifiant.

19. Utilisation d'au moins un 2-alkylpolyisobuténylphénol et/ou d'au moins un produit d'addition de Mannich de celui-ci, obtenu(s) par un procédé selon l'une quelconque des revendications 1 à 9, pour améliorer la stabilité thermique de kérosènes.

20. Utilisation d'au moins un 2-alkylpolyisobuténylphénol et/ou d'au moins un produit d'addition de Mannich de celui-ci, obtenu(s) par un procédé selon l'une quelconque des revendications 1 à 9, comme additif pour des kérosènes pour diminuer les dépôts dans le système de carburant et/ou le système de combustion d'une turbine.
